# EUROPÄISCHE PATENTANMELDUNG

(11) **EP 0 780 288 A2**
(43) Veröffentlichungstag der Anmeldung: **25.06.1997**
(21) Anmeldenummer: 96120694.3
(22) Anmeldetag: 20.12.1996
(51) Int. Cl.: B62K 7/00

(54) **Zweiradrahmen**

(30) Priorität: 21.12.1995 DE 19547863
(71) Anmelder: Bringewald & Gallinsky KG, 38446 Wolfsburg (DE)
(72) Erfinder: Bringewald, Horst, 38446 Wolfsburg (DE)
(74) Vertreter: Einsel, Martin, Dipl.-Phys.

(57) **Zusammenfassung**

Zwecks Lastentransport mit einem Zweirad ohne störende Beeinträchtigung der Rahmenstabilität ist ein Lastenträger (9) in den aus Rohren bestehenden Zweiradrahmen (1) vorderradnah und niedrig integriert, indem der Rahmen (1) eine untere Stange (7) als Transportgutstütze und eine vorderradnah ringartig ausgebildete obere Stange (6, 8) zum Umschließen des Transportgutes (81) enthält.

## Beschreibung

Die Erfindung betrifft einen Zweiradrahmen mit Lenkrohr für die Halterung und Lenkung eines Vorderrades und mit Sitzrohr für die Halterung eines Sattels, eines Tretlagers und eines Hinterrades sowie mit stabilisierenden, Sitzrohr und Lenkrohr verbindenden Rahmenteilen, die zugleich zur Aufnahme und/oder Halterung zusätzlicher Transportgüter nutzbar ausgebildet sind. Solche Rahmen sind aus der DE-OS 21 40 544 bekannt. Bei ihnen ist die Breite der mit dem Rahmen transportierbaren Lasten bzw. Transportgüter durch den Abstand zwischen den Tretpedalarmen begrenzt.

Der Erfindung liegt die Aufgabe zugrunde, einen Zweiradrahmen zu schaffen, der den Transport auch breiterer Transportgüter ohne Beeinträchtigung seiner Festigkeit (Steife, insbesondere Verbindungssteife) erlaubt.

Diese Aufgabe wird durch die Merkmale des Anspruchs 1 gelöst. Vorteilhafte Ausbildungen der Erfindung sind in den abhängigen Ansprüchen gekennzeichnet.

Im Prinzip besteht die Erfindung bei einem Zweiradrahmen mit Lenkrohr für die Halterung und Lenkung eines Vorderrades und mit Sitzrohr für die Halterung eines Sattels, eines Tretlagers und eines Hinterrades sowie mit stabilisierenden, Sitzrohr und Lenkrohr verbindenden Rahmenteilen, die zugleich zur Aufnahme und/oder Halterung zusätzlicher Transportgüter nutzbar ausgebildet sind, darin, daß die stabilisierenden Rahmenteile zwei Stangen enthalten, von denen eine oberhalb und eine andere unterhalb des Tretlagers mit dem Sitzrohr verbunden ist, daß die untere Stange direkt oder indirekt mit dem Lenkrohr verbunden ist und als Transportgutstütze ausgebildet und/oder bemessen ist, daß die obere Stange nahe dem Lenkrohr und mit einem ausreichend Tretraum gewährleistenden Abstand vom Sitzrohr einen das Transportgut umschließend ausgebildeten und oberhalb der unteren Stange angeordneten Halterahmen mit im wesentlichen horizontaler Rahmenfläche aufweist, und daß der Halterahmen an seiner dem Lenkrohr zugewandten Seite direkt oder indirekt mit dem Lenkrohr und an seiner dem Lenkrohr abgewandten Seite mit der oberen Stange verbunden ist, derart, daß obere Stange und Halterahmen zusammen eine obere stabilisierende Stange des Zweiradrahmens bilden.

Die stabilisierenden Stangen sind vorzugsweise rohrförmig und mit rechteckigem Profil ausgebildet. Das Lenkrohr bildet vorzugsweise zusammen mit einer vorderradnahen senkrechten Strebe des Halterahmens und mit Streben zwischen diesem Halterahmen und dem unteren Ende des Lenkrohrs einen zusätzlichen Stabilisationsrahmen.

Bei der Erfindung wird also ein Lastenträger unmittelbar in einen einfach aufgebauten Zweiradrahmen integriert, der durch Aufbau aus Rahmenrohren (worunter in der Zweiradtechnik Hohlmaterial mit rundem oder eckigem Querschnitt verstanden wird) steif und zugleich gewichtsarm konstruierbar ist. Dabei gehen die Maßnahmen nicht auf Kosten des einfachen Betriebs des Zweirads, da durch den tiefen Vertauf des unteren Tragrohrs nicht nur eine gute Fahrstabilität (durch tiefe Lage des Schwerpunkts des Transportguts, z. B. eines Stapelbehälters), sondern auch ein leichtes Besteigen und Verlassen des Zweirads sichergestellt werden. Damit hängt auch die Anordnung des Lastenträgers unmittelbar hinter dem Vorderrad zusammen. Sofern Transportgüter mit großen Längsabmessungen geladen werden sollen, ist eine indirekte Lenkung vorteilhaft, die vorzugsweise zwischen einer Fahrbetriebsstellung, in der sie zugleich eine Transportgutsicherung bildet, und einer Stellung klappbar ist, in der sie das Be- und Entladen zuläßt.

Zusammengefaßt ist also zwecks Lastentransport mit einem Zweirad ohne störende Beeinträchtigung der Rahmenstabilität ein Lastenträger in den aus Rohren bestehenden Zweiradrahmen vorderradnah und niedrig integriert, indem der Rahmen eine untere Stange als Transportgutstütze und eine vorderradnah ringartig ausgebildete obere Stange zum Umschließen des Transportgutes enthält.

Zur näheren Erläuterung der Erfindung werden im folgenden vier Ausführungsbeispiele der Erfindung anhand der Zeichnungen beschrieben.

Diese zeigen in:
- **Figur 1**: eine perspektivische Ansicht eines Fahrrades gemäß der Erfindung
- **Figur 2**: eine Seitenansicht eines erfindungsgemäßen Rahmens für direkte Lenkung sowie in den
- **Figuren 3 und 4**: in Seitenansicht bzw. Draufsicht als Abwandlung eine Ausführung für indirekte Lenkung.

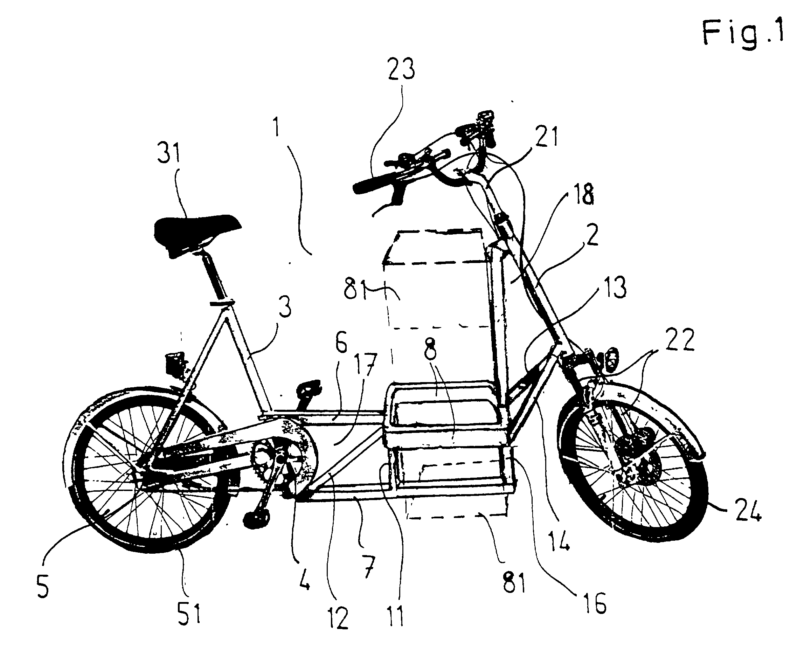

Der Rahmen 1 in **Figur 1** weist an seinem vorderen Ende ein Lenkrohr 2 zur Aufnahme einer üblichen Lenksäule 21 auf, die sich nach unten in einer Vorderradgabel 22 fortsetzt und oberhalb des Lenkrohrs 2 einen üblichen Fahrradlenker 23 trägt. An seinem hinteren Ende hat der Rahmen 1 zur Befestigung eines ebenfalls üblichen Sitzsattels 31 ein Sitzrohr 3, das zur Aufnahme eines Tretlagers 4 in optimaler Tretposition eingerichtet ist und eine Lagerung 5 für das Hinterrad 51 trägt. Am Sitzrohr 3 sind eine obere und eine untere Stange 6 bzw. 7 ober- bzw. unterhalb des Tretlagers 4 befestigt, insbesondere verschweißt oder verlötet. Die untere Stange 7 ist etwa waagerecht zwischen den Rädern angeordnet, während die obere Stange 6 in einem vorderradnahen Bereich einen Halterahmen 8 aufweist, der Behälter 81 ringartig umschließt. Der oder die Behälter 81 oder dergleichen stützen sich auf der unteren Stange 7 ab. Stange 7 und Halterahmen 8 bilden also einen Lastenträger 9 mit Lagesicherung, wobei die Lage der Stange 7 unterhalb des Tretlagers 4 einen niedrigen Schwerpunkt ergibt.

Zur Versteifung des Rahmens 1 im Bereich des so gebildeten Lastenträgers 9 dienen ein senkrechtes Verbindungsrohr 11 und eine schräge Traverse 12, zwischen dem hinteren Ende des Halterahmens 8 und der unteren Stange 7, die einen Unter-Rahmen 17 bilden.

Das Lenkrohr 2 ist über Stützstreben 13 und 14 mit dem Halterahmen 8 starr verbunden. Die untere Stange 7 ist an ihrem vorderen Ende mittels einer senkrechten Strebe 16 mit dem Halterahmen 8 verbunden und oberhalb des Halterahmens 8 so lang bemessen, daß das obere Ende 15 mit dem oberen Ende des Lenkrohrs 2 verbunden ist. Die Stange 7 dient im Bereich des Lastenträgers 9 bzw. des Halterahmens 8 zur Abstützung des Transportgutes 81. Durch die Rohre 13, 14, 2, 16 wird ein weiterer stabiler Rahmen 18 gebildet. Die Strebe 16 kann mit dem Lenkrohr 2 direkt verbunden werden.

Durch die Konstruktion des Rahmens 1 aus Stangen 6, 7, 8 und Halterahmen 8 sowie zwei Unterrahmen 17, 18 sowie durch die Rechteckprofile der rohrförmigen Stange 6, 7, 8 wird insgesamt eine tragfähige, verwindungssteife und gegen Seitenwind unempfindliche Fahrradform erzielt. Wegen des niedrigen Schwerpunkts kann das beladene Fahrrad durch eine seitlich am Rahmen 8 angebrachte Klappstütze abgestützt werden.

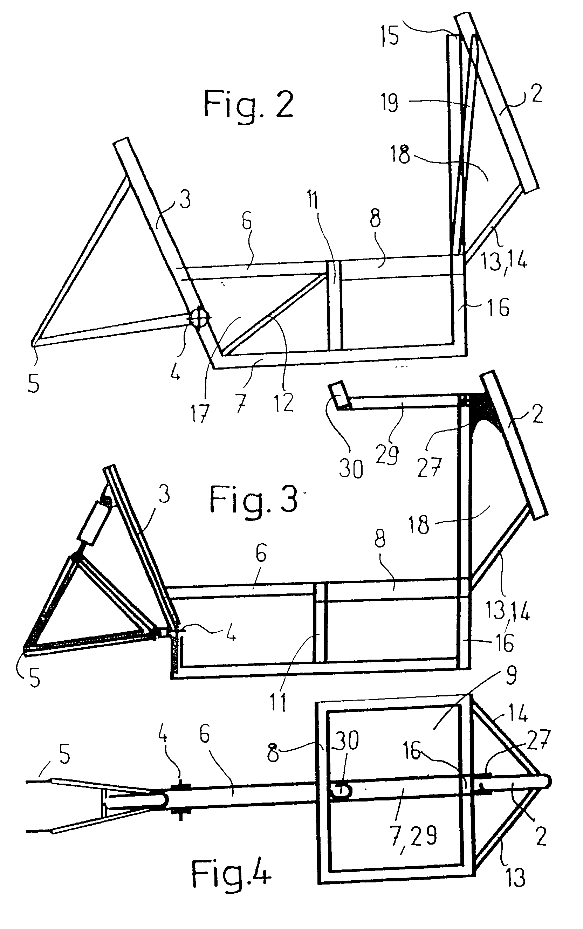

**Figur 2** zeigt das Prinzip in Seitenansicht. Deutlich erkennbar ist, daß die Teile 6 und 8 eine Einheit bilden. Der vordere Unter-Rahmen 18 kann durch eine feste Verbindung bei 15 geschlossen werden. Es ist aber möglich, eine zusätzliche Stabilisierung durch eine Strebe 19 zu erzielen.

Die **Figuren 3 und 4** zeigen eine Abwandlung der Figur 2 für eine indirekte Lenkung. Die obere und untere Stange 6 bzw. 7 liegen wie in Figur 2 teils hoher, teils tiefer als das Tretlager 4 am Sitzrohr 3. An der senkrechten Strebe 16 der unteren Stange 7 ist am oberen Ende 15 eine Verbindung mit dem Lenkrohr 2 vorgesehen, z. B. durch ein Knotenblech 27. An dieser Stelle ist ein Rahmenfortsatz 29 befestigt, der horizontal und mittig nach hinten weist. Sein freies Ende ist mit einer Aufnahmehülse 30 für die Welle des Lenkers 23 bestückt, die über eine Kraftübertragung mit der eigentlichen, im Lenkrohr 2 geführten Lenksäule 21 in Antriebsverbindung steht.

Die obere Stange 6 hat auch hier einen vorderen Halterahmen 8 oder einen ringartigen Bereich, der zusammen mit dem darunterliegenden Bereich der unteren Stange 7 einen Lastenträger 9 bildet. Dieser Lastenträger 9 kann infolge der indirekten Lenkung mit dem Rahmenfortsatz 29 relativ lang sein, ohne die Fahrbequemlichkeit zu beeinträchtigen.

Deutlich ist in Figur 3 der Verlauf der Stützstreben 13, 14 zu erkennen. Eine zusätzliche Strebe 19 wie in Figur 2 ist hier wegen des Knotenblechs nicht vorgesehen.

Die Ausführungsbeispiele zeigen, daß mit der Erfindung ein Zweirad geschaffen ist, daß den Transport auch schwererer Transportgüter ohne störende Beeinträchtigung von Steife, Fahrstabilität und -bequemlichkeit gestattet.

Die obere Stange 6 bzw. der Halterahmen 8 ist mit Aufnahmen für Wechselbehälter 8 oder Stapelboxen versehen. Fahrradkuriere oder auch die Post haben genau jeweils ihren Zwecken angepaßte Stapelbehälter von etwa Bierkistengröße. Das Fahrrad könnte für den Privatkunden auch gleich mit derartigen Stapelboxen angeboten werden. Andere Behälter müssen dann nicht damit transportiert werden.

Das Fahrrad kann für Eisverkäufer bemessen werden, mit breitem Halterahmen 8. Anstelle des Eisverkaufskastens können entsprechende Kindersitze für durchaus zwei Kinder eingesetzt werden, die dadurch sehr sicher und aufgrund ihrer relativ tiefen Anordnung auch besonders unfallgeschützt transportiert werden können und dabei ständig im Blick des Fahrers sind, anders als beispielsweise bei Anhängern, die hinter dem Fahrrad angespannt werden.

Es ist auch möglich, gefederte Gabeln 22 vorzusehen.

Die Konstruktion ist auch für Dreiräder anwendbar.

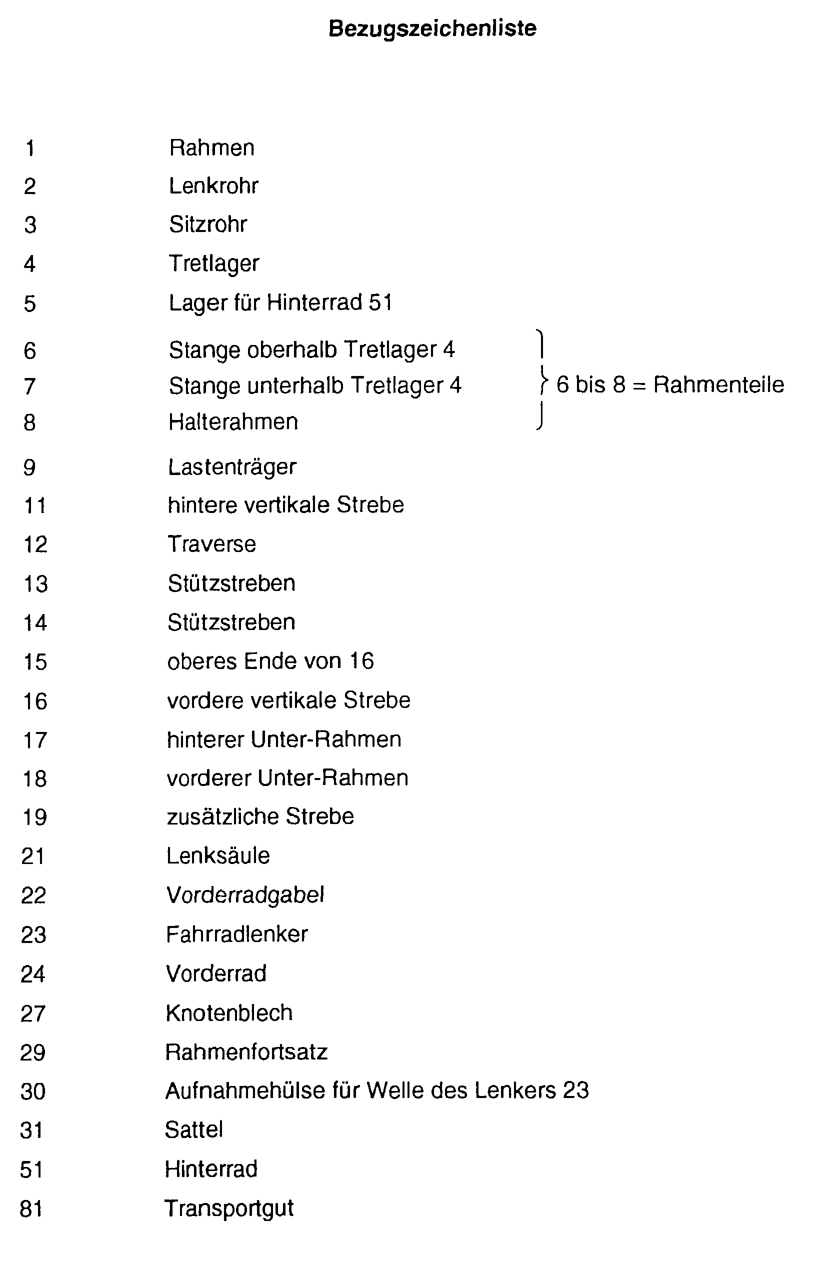

## Patentansprüche

1. Zweiradrahmen mit Lenkrohr (2) für die Halterung und Lenkung eines Vorderrades (24) und mit Sitzrohr (3) für die Halterung eines Sattels (31), eines Tretlagers (4) und eines Hinterrades (51) sowie mit stabilisierenden, Sitzrohr (3) und Lenkrohr (2) verbindenden Rahmenteilen (6, 7, 8), die zugleich zur Aufnahme und/oder Halterung zusätzlicher Transportgüter (81) nutzbar ausgebildet sind,
**dadurch gekennzeichnet,**
**daß** die stabilisierenden Rahmenteile (6, 7, 8) zwei Stangen (6, 7) enthalten, von denen eine (6) oberhalb und eine andere (7) unterhalb des Tretlagers (4) mit dem Sitzrohr (3) verbunden ist, daß die untere Stange (7) direkt oder indirekt mit dem Lenkrohr (2) verbunden und als Transportgutstütze ausgebildet und/oder bemessen ist, daß die obere Stange (6) nahe dem Lenkrohr (2) und mit einem ausreichend Tretraum gewährleistenden Abstand vom Sitzrohr (3) einen das Transportgut (81) umschließend ausgebildeten und oberhalb der unteren Stange (7) angeordneten Halterahmen (8) mit im wesentlichen horizontaler Rahmenfläche aufweist, und daß der Halterahmen (8) an seiner dem Lenkrohr (2) zugewandten Seite direkt oder indirekt mit dem Lenkrohr (2) und an seiner dem Lenkrohr (2) abgewandten Seite mit der oberen Stange (6) verbunden ist, derart, daß obere Stange (6) und Halterahmen (8) zusammen eine obere stabilisierende Stange (6, 8) des Zweiradrahmens (1) bilden.

2. Zweiradrahmen nach Anspruch 1,
**dadurch gekennzeichnet,**
**daß** die obere und die untere Stange (6, 7) am vorderen und/oder hinteren Ende des Halterahmens (8) durch je eine im wesentlichen vertikale Strebe (11, 16) verbunden sind.

3. Zweiradrahmen nach Anspruch 1 oder 2,
**dadurch gekennzeichnet,**
**daß** zwischen dem hinteren Ende des Halterahmens (8) der oberen Stange (6) und dem hinteren Ende der unteren Stange (7) eine Traverse (12) vorgesehen ist.

4. Zweiradrahmen nach einem der Ansprüche 1 bis 3,
**dadurch gekennzeichnet,**
**daß** die vorderradnahe senkrechte Strebe (16) über den Halterahmen (8) verlängert und mit seinem oberen Ende (15) mit dem Lenkrohr (2) verbunden ist.

5. Zweiradrahmen nach Anspruch 4,
**dadurch gekennzeichnet,**
**daß** zwischen einem vorderen Bereich des Halterahmens (8) des oberen Tragrohrs (6) und dem Lenkrohr (2) Streben (13, 14, 19) vorgesehen sind.

6. Zweiradrahmen nach Anspruch 4 oder 5,
**dadurch gekennzeichnet,**
**daß** eine indirekte Lenkung für das Vorderrad (24) vorgesehen ist, daß das obere Ende (15) der vorderen Strebe (16) einen im wesentlichen horizontal und mittig nach hinten weisenden Rahmenfortsatz (29) trägt, der an einem hinteren, freien Ende mit einer Aufnahmehülse (30) für die Lenksäule des Lenkers (23) versehen ist.

7. Zweiradrahmen nach Anspruch 6,
**dadurch gekennzeichnet,**
**daß** der Rahmenfortsatz (29) klappbar ist.

8. Zweiradrahmen nach Anspruch 7,
**dadurch gekennzeichnet,**
**daß** der Rahmenfortsatz (29) in seiner Fahrbetriebsstellung verriegelbar ist.

9. Zweiradrahmen nach einem der Ansprüche 1 bis 8,
**dadurch gekennzeichnet,**
**daß** der Lastenträger (7, 8, 9) für die Aufnahme von Transportbehältem (81) ausgelegt ist.

10. Zweiradrahmen nach einem der Ansprüche 1 bis 9,
**dadurch gekennzeichnet,**
**daß** die Stangen (6, 7) rohrförmig ausgebildet sind.

11. Zweiradrahmen nach Anspruch 10,
**dadurch gekennzeichnet,**
**daß** die Stangen (6, 7) rechteckiges Profil haben.

12. Zweiradrahmen nach einem der Ansprüche 1 bis 11,
**dadurch gekennzeichnet,**
**daß** das Lenkrohr (2), die vorderradnahe senkrechte Strebe (16) und die Streben (13, 14) zwischen Halterahmen (8) und dem unteren Ende des Lenkrohrs (2) einen Stabilisationsrahmen (18) bilden.

13. Zweiradrahmen nach einem der Ansprüche 1 bis 12,
**dadurch gekennzeichnet,**
**daß** am Halterahmen (8) oder einer Strebe des Halterahmens (8) eine klappbare Stütze vorgesehen ist.

14. Zweiradrahmen nach Anspruch 6,
**dadurch gekennzeichnet,**
**daß** der Rahmenfortsatz (29) eine Länge aufweist, die im wesentlichen der Längsausdehnung des Halterahmens (8) entspricht.
